# EUROPEAN PATENT APPLICATION

(11) **EP 3 666 452 A1**
(43) Date of publication of application: **17.06.2020**
(21) Application number: 19214279.2
(22) Date of filing: 06.12.2019
(51) Int. Cl.: B23K 35/02, B23K 35/30, B23K 35/36, B23K 35/40, B23K 9/173, B23K 35/38, B23K 101/34, B23K 103/04

(54) **IMPROVED CRACK-RESISTANT WIRE ELECTRODE CONTAINING ADDED SULFUR SOURCE AND MAGNESIUM OXIDE**

(30) Priority: 12.12.2018 US 201816217965
(71) Applicant: Hobart Brothers LLC, Troy OH 45373 (US)
(72) Inventor: XIAO, Zhigang, Ohio 45373 (US)
(74) Representative: HGF Limited

(57) **Abstract**

A tubular welding electrode for arc welding that has improved crack resistance comprises a steel sheath disposed around a granular powder flux fill core. The granular powder flux fill core comprises magnesium oxide and a sulfur source such as iron sulfide.

## Description

### FIELD

The present disclosure relates generally to welding and, more specifically, to steel wire electrodes for arc welding that have improved crack resistance due at least in part to the addition of a sulfur source and magnesium oxide.

### BACKGROUND

Welding is a process that has become ubiquitous in various industries for a variety of applications. For example, welding is often used in applications such as shipbuilding, offshore platform, construction, pipe mills, and so forth. Certain welding techniques (e.g., Gas Metal Arc Welding (GMAW), Gas-shielded Flux Core Arc Welding (FCAW-G), and Gas Tungsten Arc Welding (GTAW)), typically employ a shielding gas (e.g., argon, carbon dioxide, or oxygen) to provide a particular local atmosphere in and around the welding arc and the weld pool during the welding process, while others (e.g., Flux Core Arc Welding (FCAW), Submerged Arc Welding (SAW), and Shielded Metal Arc Welding (SMAW)) do not. Additionally, certain types of welding may involve a welding electrode in the form of welding wire. Welding wire may generally provide a supply of filler metal for the weld as well as provide a path for the current during the welding process. Furthermore, certain types of welding wire (e.g., tubular welding wire) may include one or more components (e.g., flux, arc stabilizers, or other additives) that may generally alter the welding process or the properties of the resulting weld.

A sulfur source may be added to the flux of steel wire electrodes (such as flux core wire electrodes). Steel wire electrodes containing relatively high amounts of a sulfur source (e.g., approximately 0.01 to 0.1 wt. % of a sulfur source by weight of the electrode) in the flux tend to demonstrate dramatically improved liquid metal wetting properties as compared to electrodes with no added sulfur source. The improved wetting performance of such a steel wire electrode to a solid surface persists regardless of whether the solid surface is clean. However, steel wire electrodes containing high amounts of an added sulfur source in the flux are more likely to crack after the weld metal solidifies. Therefore, there is a need to improve the crack resistance of steel wire electrodes in which high amounts of a sulfur source have been added to the flux.

### SUMMARY

According to one aspect of the present disclosure, a tubular welding electrode comprises a steel sheath disposed around a granular powder flux fill core. The granular powder flux fill core comprises magnesium oxide and sulfur. The granular powder flux fill core comprises, by weight of the electrode, 0.5 to 4.0 wt. % magnesium oxide (for example, 2.0 to 3.0 wt. % magnesium oxide, or 2.5 wt. % magnesium oxide) and 0.01 to 0.1 wt. % of a sulfur source (for example, 0.02 to 0.05 wt. % of a sulfur source, or 0.03 wt. % of a sulfur source). The sulfur source may be iron sulfide.

According to another aspect of the present disclosure, a method for producing a tubular welding electrode comprises the steps of: providing a strip of a steel material having a length; forming the strip into a "U" shape along the length; filling the "U" shape of the strip with a granular powder flux; and mechanically closing the "U" shape to form a tubular welding electrode containing a core of the granular powder flux. The granular powder flux comprises, by weight of the electrode, 0.5 to 4.0 wt. % magnesium oxide and 0.01 to 0.1 wt. % of a sulfur source. For example, the granular powder flux fill core may comprise, by weight of the electrode, 2.0 to 3.0 wt. % magnesium oxide, or 2.5 wt. % magnesium oxide; and 0.02 to 0.05 wt. % of a sulfur source, or 0.03 wt. % of a sulfur source. The sulfur source may be iron sulfide. The method may further comprise an additional step of drawing the tubular welding electrode to a desired diameter. The mechanical closing step may involve forming a butt or overlap seam.

According to another aspect of the present disclosure, a method for producing a tubular welding electrode may comprise the steps of: providing a strip of a steel material having a length; forming the strip into a substantially cylindrical shape along the length; welding the strip to form a tube sealed along the length; and filling the tube with a granular powder flux to form a tubular welding electrode. The granular powder flux comprises, by weight of the electrode, 0.5 to 4.0 wt. % magnesium oxide and 0.01 to 0.1 wt. % of a sulfur source. For example, the granular powder flux fill core may comprise, by weight of the electrode, 2.0 to 3.0 wt. % magnesium oxide, or 2.5 wt. % magnesium oxide; and 0.02 to 0.05 wt. % of a sulfur source, or 0.03 wt. % of a sulfur source. The sulfur source may be iron sulfide. The method may further comprise an additional step of drawing the tubular welding electrode to a desired diameter. The mechanical closing step may involve forming a butt or overlap seam.

It is to be understood that both the foregoing general description and the following detailed description describe various embodiments and are intended to provide an overview or framework for understanding the nature and character of the claimed subject matter. The accompanying drawings are included to provide a further understanding of the various embodiments, and are incorporated into and constitute a part of this specification. The drawings illustrate the various embodiments described herein, and together with the description serve to explain the principles and operations of the claimed subject matter.

### BRIEF DESCRIPTION OF THE DRAWINGS

The following is a description of the examples depicted in the accompanying drawings. The figures are not necessarily to scale, and certain features and certain views of the figures may be shown exaggerated in scale or in schematic in the interest of clarity or conciseness.
FIG. 1 is a block diagram of a gas metal arc welding (GMAW) system, in accordance with embodiments of the present disclosure;
FIG. 2 is a cross-sectional view of a tubular welding wire, in accordance with embodiments of the present disclosure;
FIG. 3 is a process by which the tubular welding wire may be used to weld a workpiece, in accordance with embodiments of the present disclosure; and
FIG. 4 is a process for manufacturing the tubular welding wire, in accordance with embodiments of the present disclosure.

The foregoing summary, as well as the following detailed description, will be better understood when read in conjunction with the figures. It should be understood that the claims are not limited to the arrangements and instrumentality shown in the figures. Furthermore, the appearance shown in the figures is one of many ornamental appearances that can be employed to achieve the stated functions of the apparatus.

### DETAILED DESCRIPTION

In the following detailed description, specific details may be set forth in order to provide a thorough understanding of embodiments of the present disclosure. However, it will be clear to one skilled in the art when disclosed examples may be practiced without some or all of these specific details. For the sake of brevity, well-known features or processes may not be described in detail. In addition, like or identical reference numerals may be used to identify common or similar elements.

When introducing elements of various embodiments of the present disclosure, the articles "a," "an," "the," and "said" are intended to mean that there are one or more of the elements. The terms "comprising," "including," and "having" are intended to be inclusive and mean that there may be additional elements other than the listed elements. It should be appreciated that, as used herein, the term "tubular welding electrode" or "tubular welding wire" may refer to any welding wire or electrode having a metal sheath and a granular or powdered core, such as metal-cored or flux-cored welding electrodes. It should also be appreciated that the term "stabilizer" or "additive" may be generally used to refer to any component of the tubular welding that improves the quality of the arc, the quality of the weld, or otherwise affect the welding process. Furthermore, as used herein, "approximately" may generally refer to an approximate value that may, in certain embodiments, represent a difference (e.g., higher or lower) of less than 0.01%, less than 0.1%, or less than 1% from the actual value. That is, an "approximate" value may, in certain embodiments, be accurate to within (e.g., plus or minus) 0.01%, within 0.1%, or within 1% of the stated value.

As mentioned, certain types of welding electrodes (e.g., tubular welding wire) may include one or more components (e.g., flux, arc stabilizers, or other additives) that may generally alter the welding process and the properties of the resulting weld.

The presently disclosed welding electrodes improve metal wetting and bead appearance on scale plates welding process with a high welding travel speed (e.g., between approximately 100 and 750 in/min).

According to one aspect of the present disclosure, a tubular welding electrode having a length comprises a granular powder flux fill core extending substantially along the length of the electrode and a steel sheath extending substantially along the length of the electrode and substantially encasing the granular flux fill core.

According to another aspect of the present disclosure, the sulfur content of the steel sheath may be reduced as much as possible. For example, the steel sheath may contain no added sulfur and any sulfur present would be as an unavoidable impurity. In contrast, the granular powder flux fill core may contain, by weight of the electrode, 0.01 to 0.1 wt. % of a sulfur source such as iron sulfide (which may have the chemical formula FeS, Fe₂S₃, Fe₃S₄, or Fe₇S₈), iron sulfate (FeSO₄), calcium sulfate (CaSO₄), or magnesium sulfate (MgSO₄). For example, the granular powder flux fill core may contain, by weight of the electrode, 0.02 to 0.05 wt. % of a sulfur source or 0.03 wt. % of a sulfur source. When steel contains a relatively high sulfur content, the liquid metal wetting performance to the solid workpiece surface is dramatically improved, regardless of whether the workpiece surface has or has not been cleaned. However, a high sulfur content in steel weld metal may cause cracking after the weld metal has solidified.

Adding magnesium oxide (MgO) to the tubular wire flux of steel wire electrodes significantly reduces the cracking probability of the weld metal without impacting the weld metal mechanical properties. Thus, adding magnesium oxide to the tubular wire flux helps to counteract the increased probability of cracking caused by adding a sulfur source to the wire flux. According to an embodiment of the present disclosure, the granular powder flux fill core may contain, by weight of the electrode, 0.5 to 4.0 wt. % magnesium oxide (for example, 2.0 to 3.0 wt. % magnesium oxide or 2.5 wt. % magnesium oxide).

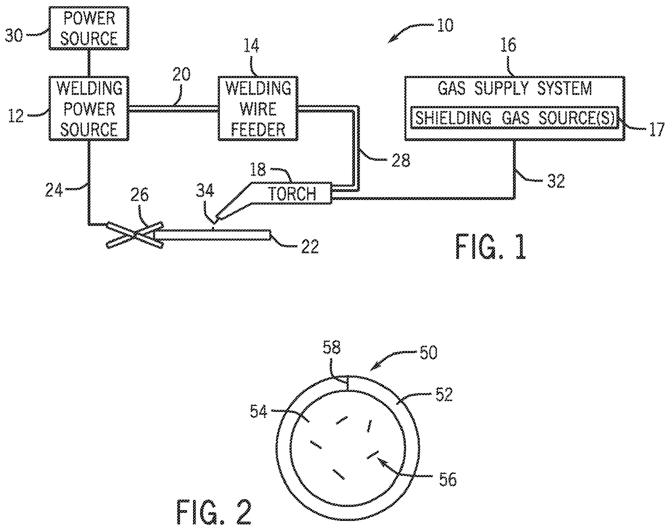

Turning to the figures, FIG. 1 illustrates an embodiment of a gas metal arc welding (GMAW) system 10 that utilizes a welding electrode (e.g., tubular welding wire) in accordance with the present disclosure. It should be appreciated that, while the present discussion may focus specifically on the GMAW system 10 illustrated in FIG. 1, the presently disclosed welding electrodes may benefit any arc welding process (e.g., FCAW, FCAW-G, GTAW, SAW, SMAW, or similar arc welding process) that uses a welding electrode. The welding system 10 includes a welding power source 12, a welding wire feeder 14, a gas supply system 16, and a welding torch 18. The welding power source 12 generally supplies power to the welding system 10 and may be coupled to the welding wire feeder 14 via a cable bundle 20as well as coupled to a workpiece 22 using a lead cable 24 having a clamp 26. In the illustrated embodiment, the welding wire feeder 14 is coupled to the welding torch 18 via a cable bundle 28 in order to supply consumable, tubular welding wire (i.e., the welding electrode) and power to the welding torch 18 during operation of the welding system 10. In another embodiment, the welding power unit 12 may couple and directly supply power to the welding torch 18.

The welding power source 12 may generally include power conversion circuitry that receives input power from an alternating current power source 30 (e.g., an AC power grid, an engine/generator set, or a combination thereof), conditions the input power, and provides DC or AC output power via the cable 20. As such, the welding power source 12 may power the welding wire feeder 14 that, in turn, powers the welding torch 18, in accordance with demands of the welding system 10. The lead cable 24 terminating in the clamp 26 couples the welding power source 12 to the workpiece 22 to close the circuit between the welding power source 12, the workpiece 22, and the welding torch 18. The welding power source 12 may include circuit elements (e.g., transformers, rectifiers, switches, and so forth) capable of converting the AC input power to a direct current electrode positive (DCEP) output, direct current electrode negative (DCEN) output, DC variable polarity, pulsed DC, or a variable balance (e.g., balanced or unbalanced) AC output, as dictated by the demands of the welding system 10. It should be appreciated that the presently disclosed welding electrodes (e.g., tubular welding wire) may enable improvements to the welding process (e.g., improved arc stability or improved weld quality) for a number of different power configurations.

The illustrated welding system 10 includes a gas supply system 16 that supplies a shielding gas or shielding gas mixtures from one or more shielding gas sources 17 to the welding torch 18. In the depicted embodiment, the gas supply system 16 is directly coupled to the welding torch 18 via a gas conduit 32. In another embodiment, the gas supply system 16 may instead be coupled to the wire feeder 14, and the wire feeder 14 may regulate the flow of gas from the gas supply system 16 to the welding torch 18. A shielding gas, as used herein, may refer to any gas or mixture of gases that may be provided to the arc or weld pool in order to provide a particular local atmosphere (e.g., to shield the arc, improve arc stability, limit the formation of metal oxides, improve wetting of the metal surfaces, alter the chemistry of the weld deposit, and so forth). In certain embodiments, the shielding gas flow may be a shielding gas or shielding gas mixture (e.g., argon (Ar), helium (He), carbon dioxide (CO₂), oxygen (O₂), nitrogen (N₂), similar suitable shielding gases, or any mixtures thereof). For example, a shielding gas flow (e.g., delivered via the conduit 32) may include Ar, Ar/CO₂ mixtures, Ar/CO2/O₂ mixtures, Ar/He mixtures, and so forth. By specific example, in certain embodiments, the shielding gas flow may include 90% Ar and 10% CO₂.

Accordingly, the illustrated welding torch 18 generally receives the welding electrode (i.e., the tubular welding wire), power from the welding wire feeder 14, and a shielding gas flow from the gas supply system 16 in order to perform GMAW of the workpiece 22. During operation, the welding torch 18 may be brought near the workpiece 22 so that an arc 34 may be formed between the consumable welding electrode (i.e., the welding wire exiting a contact tip of the welding torch 18) and the workpiece 22. Additionally, as discussed below, by controlling the composition of the welding electrode (i.e., the tubular welding wire), the chemistry of the arc 34 and the resulting weld (e.g., composition and physical characteristics) may be varied. For example, the welding electrode may include fluxing or alloying components that may affect the welding process (e.g., act as arc stabilizers) and, further, may become at least partially incorporated into the weld, affecting the mechanical properties of the weld. Furthermore, certain components of the welding electrode (i.e., welding wire) may also provide additional shielding atmosphere near the arc, affect the transfer properties of the arc 34, deoxidize the surface of the workpiece, and so forth.

The resulting weld metal may contain a relatively high amount of sulfur (for example, 0.03% to 0.04% sulfur by weight of the weld metal) but have the same cracking probability as a standard metal core (e.g., a weld metal containing 0.01% or less sulfur by weight of the weld metal). Thus, the magnesium oxide added to the tubular wire flux reduces the cracking probability of the weld metal without impacting the weld metal mechanical properties. In addition, the presently disclosed welding electrodes with high sulfur source content improve metal wetting and bead appearance on scale plates welding process with a high welding travel speed (e.g., between approximately 100 and 750 in/min).

A cross-section of an embodiment of the presently disclosed welding wire is illustrated in FIG. 2, which shows a tubular welding wire 50 that includes a metallic sheath 52. The metallic sheath 52 may encapsulate a granular powder flux fill core 54 (also referred to as filler). In certain embodiments, the tubular welding wire 50 may comply with one or more American Welding Society (AWS) standards. For example, in certain embodiments, the tubular welding wire 50 may be in accordance with AWS A5.18 ("SPECIFICATION FOR CARBON STEEL ELECTRODES AND RODS FOR GAS SHEILDED ARC WELDING") or with AWS A5.36 ("SPECIFICATION FOR CARBON AND LOW-ALLOY STEEL FLUX CORED ELECTRODES FOR FLUX CORED ARC WELDING AND METAL CORED ELECTRODES FOR GAS METAL ARC WELDING").

The metallic sheath 52 of the tubular welding wire 50 illustrated in FIG. 2 may be manufactured from any suitable metal or alloy, such as steel. It should be appreciated that the composition of the metallic sheath 52 may affect the composition of the resulting weld and the properties of the arc 34. In certain embodiments, the metallic sheath 52 may account for between approximately 80% and 90% of the total weight of the tubular welding wire 50. For example, in certain embodiments, the metallic sheath 52 may provide approximately 84% or approximately 86% of the total weight of the tubular welding wire 50.

As such, the metallic sheath 52 may include certain additives or impurities (e.g., alloying components, carbon, alkali metals, manganese, or similar compounds or elements) that may be selected to provide desired weld properties. In certain embodiments, the metallic sheath 52 of the tubular welding wire 50 may be a low-carbon strip that includes a relatively small (e.g., lower or reduced) amount of carbon (e.g., less than approximately 0.06%, less than approximately 0.07%, or less than approximately 0.08% carbon by weight). For example, in an embodiment, the metallic sheath 52 of the tubular welding wire 50 may include, by weight of the sheath, between approximately 0.07% and 0.08% carbon wire. Additionally, in certain embodiments, the metallic sheath 52 may be made of steel generally having a small number of inclusions. For example, in certain embodiments, the metallic sheath 52 may include, by weight of the sheath, between approximately 0.25% and approximately 0.5%, or approximately 0.34% manganese. By further example, in certain embodiments, the metallic sheath 52 may include, by weight of the sheath, less than approximately 0.02% phosphorus or sulfur. The metallic sheath 52, in certain embodiments, may also include, by weight of the sheath, less than approximately 0.04% silicon, less than approximately 0.05% aluminum, less than approximately 0.1% copper, and less than approximately 0.02% tin.

The granular powder flux fill core 54 of the illustrated tubular welding wire 50 may generally be a compacted powder. In certain embodiments, the granular powder flux fill core 54 may account for between approximately 7% and approximately 40%, or between approximately 10% and approximately 20%, of the total weight of the tubular welding wire 50. For example, in certain embodiments, the granular powder flux fill core 54 may provide approximately 14%, approximately 15%, or approximately 16% of the total weight of the tubular welding wire 50. Furthermore, in certain embodiments, the components of the granular powder flux fill core 54, discussed below, may be homogenously or non-homogenously (e.g., in clumps or clusters 56) disposed within the granular powder flux fill core 54. For example, the granular powder flux fill core 54 of certain welding electrode embodiments (e.g., metal-cored welding electrodes) may include one or more metals (e.g., iron, iron titanium, iron silicon, or other alloys or metals) that may provide at least a portion of the filler metal for the weld. By specific example, in certain embodiments, the granular powder flux fill core 54 may include, by weight of the flux fill core, between approximately 70% and approximately 75% iron powder, as well as other alloying components, such as ferro-titanium (e.g., 40% grade), ferro-magnesium-silicon, and ferro-silicon powder (e.g., 50% grade, unstabilized). Other examples of components that may be present within the tubular welding wire 50 (i.e., in addition to the one or more carbon sources and the one or more alkali metal and alkali earth metal compounds) include other stabilizing, fluxing, and alloying components, such as may be found in FabCOR® 86R welding electrodes available from Hobart Brothers Company.

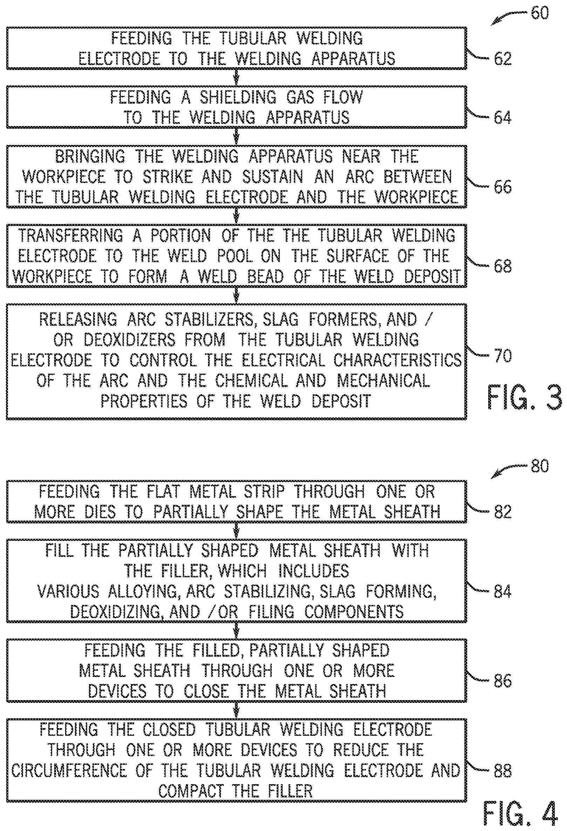

FIG. 3 illustrates an embodiment of a process 60 by which a workpiece 22 may be welded using the disclosed welding system 10 and tubular welding wire 50. The illustrated process 60 begins with feeding (block 62) the tubular welding electrode 50 (i.e., the tubular welding wire 50) to a welding apparatus (e.g., welding torch 18). As set forth above, in certain embodiments, the tubular welding wire 50 may include magnesium oxide and a sulfur source (such as iron sulfide). Further, the tubular welding wire 50 may have an outer diameter between approximately 0.024 inches and approximately 0.095 inches, between approximately 0.040 inches and approximately 3/32 inches (0.094 inches), between approximately 0.045 inches and approximately 1/16 inches (0.063 inches), between approximately 0.050 inches and approximately 0.060 inches, or approximately 0.052 inches. It may also be appreciated that, in certain embodiments, the welding system 10 may feed the tubular welding wire 50 at a suitable rate to enable a travel speed greater of between approximately 100 and 750 in/min, including at approximately 200, 300, 400, and 500 in/min (with higher travel speeds typically achievable for narrower outer diameter tubular welding wire 50).

Additionally, the process 60 includes providing (block 64) a shielding gas flow (e.g., 100% argon, 100% carbon dioxide, 75% argon/25% carbon dioxide, 90% argon/10% carbon dioxide, or similar shielding gas flow) near the contact tip of the welding apparatus (e.g., the contact tip of the torch 18). In other embodiments, welding systems may be used that do not use a gas supply system (e.g., such as the gas supply system 16 illustrated in FIG. 1) and one or more components (e.g., potassium carbonate) of the tubular welding wire 50 may decompose to provide a shielding gas component (e.g., carbon dioxide).

Next, the tubular welding wire 50 may be brought near (block 66) the workpiece 22 to strike and sustain an arc 34 between the tubular welding wire 50 and the workpiece 22. It should be appreciated that the arc 34 may be produced using, for example, a DCEP, DCEN, DC variable polarity, pulsed DC, balanced or unbalanced AC power configuration for the GMAW system 10. Once the arc 34 has been established to the workpiece 22, a portion of the tubular welding wire 50 (e.g., filler metals and alloying components) may be transferred (block 68) into the weld pool on the surface of the workpiece 22 to form a weld bead of a weld deposit. Meanwhile, the remainder of the components of the tubular welding wire 50 may be released (block 70) from the tubular welding wire 50 to serve as arc stabilizers, slag formers, or deoxidizers to control the electrical characteristics of the arc and the resulting chemical and mechanical properties of the weld deposit.

FIG. 4 illustrates an embodiment of a process 80 by which the tubular welding wire 50 may be manufactured. It may be appreciated that the process 80 merely provides an example of manufacturing a tubular welding wire 50; however, in other embodiments, other methods of manufacturing may be used to produce the tubular welding wire 50 without spoiling the effect of the present approach. That is, for example, in certain embodiments, the tubular welding wire 50 may be formed via a roll-forming method or via packing the core composition into a hollow metallic sheath. The process 80 illustrated in FIG. 4 begins with a flat steel metal strip being fed (block 82) through a number of dies that shape the strip into a partially circular or "U" shape metallic sheath 52 (e.g., producing a semicircle or trough). After the steel metal strip has been at least partially shaped into the metallic sheath 52, it may be filled (block 84) with the filler (e.g., the granular powder flux fill core 54). That is, the partially shaped metallic sheath 52 may be filled with various powdered alloying, arc stabilizing, slag forming, deoxidizing, and filling components. For example, the partially shaped metallic sheath 52 may be filled with a granular powder flux fill core 54 composition containing both magnesium oxide and a sulfur source (such as iron sulfide). Furthermore, in certain embodiments, other components (e.g., rare earth silicide, magnetite, titanate, pyrite, iron powders, or other similar components) may also be added to the partially shaped metallic sheath 52.

Next in the illustrated process 80, once the components of the granular powder flux fill core material 54 have been added to the partially shaped metallic sheath 52, the partially shaped metallic sheath 52 may then be fed through (block 86) one or more devices (e.g., drawing dies or other suitable closing devices) that may generally close the metallic sheath 52 such that it substantially surrounds the granular powder flux fill material 54 (e.g., forming a seam 58). Additionally, the closed metallic sheath 52 may subsequently be fed through (block 88) a number of devices (e.g., drawing dies or other suitable devices) to reduce the circumference of the tubular welding wire 50 by compressing the granular powder flux fill core material 54. In certain embodiments, the tubular welding wire 50 may subsequently be heated to between approximately 300° F and approximately 650° F for approximately 4 to 6 hours prior to packaging the tubular welding wire onto a spool, reel, or drum for transport, while, in other embodiments, the tubular welding wire 50 may be packaged without this baking step.

Some of the elements described herein are identified explicitly as being optional, while other elements are not identified in this way. Even if not identified as such, it will be noted that, in some embodiments, some of these other elements are not intended to be interpreted as being necessary, and would be understood by one skilled in the art as being optional.

While the present disclosure has been described with reference to certain implementations, it will be understood by those skilled in the art that various changes may be made and equivalents may be substituted without departing from the scope of the present method or system. In addition, many modifications may be made to adapt a particular situation or material to the teachings of the present disclosure without departing from its scope. For example, systems, blocks, or other components of disclosed examples may be combined, divided, re-arranged, or otherwise modified. Therefore, the present disclosure is not limited to the particular implementations disclosed. Instead, the present disclosure will include all implementations falling within the scope of the appended claims, both literally and under the doctrine of equivalents.

## Claims

1. A tubular welding electrode comprising:
a steel sheath disposed around a granular powder flux fill core,
wherein the granular powder flux fill core comprises, by weight of the electrode, 0.5 to 4.0 wt. % magnesium oxide and 0.01 to 0.1 wt. % of a sulfur source.

2. The tubular welding electrode of claim 1, wherein the granular powder flux fill core comprises, by weight of the electrode, 2.0 to 3.0 wt. % magnesium oxide.

3. The tubular welding electrode of claim 2, wherein the granular powder flux fill core comprises, by weight of the electrode, 2.5 wt. % magnesium oxide.

4. The tubular welding electrode of claim 1, wherein the granular powder flux fill core comprises, by weight of the electrode, 0.02 to 0.05 wt. % of a sulfur source.

5. The tubular welding electrode of claim 4, wherein the granular powder flux fill core comprises, by weight of the electrode, 0.03 wt. % of a sulfur source.

6. The tubular welding electrode of claim 1, wherein the sulfur source is iron sulfide.

7. A method for producing a tubular welding electrode comprising the steps of:
a. providing a strip of a steel material having a length;
b. forming the strip into a "U" shape along the length;
c. filling the "U" shape of the strip with a granular powder flux; and
d. mechanically closing the "U" shape to form a tubular welding electrode containing a core of the granular powder flux.
wherein the granular powder flux comprises, by weight of the electrode, 0.5 to 4.0 wt. % magnesium oxide and 0.01 to 0.1 wt. % of a sulfur source.

8. The method of claim 7, wherein the granular powder flux comprises, by weight of the electrode, 2.0 to 3.0 wt. % magnesium oxide.

9. The method of claim 8, wherein the granular powder flux comprises, by weight of the electrode, 2.5 wt. % magnesium oxide.

10. The method of claim 7, wherein the granular powder flux comprises, by weight of the electrode, 0.02 to 0.05 wt. % of a sulfur source.

11. The method of claim 10, wherein the granular powder flux comprises, by weight of the electrode, 0.03 wt. % of a sulfur source.

12. The method of claim 7, further comprising a step e) of drawing the tubular welding electrode to a desired diameter.

13. The method of claim 7, wherein the mechanical closing of step d) involves forming a butt or overlap seam.

14. A method for producing a tubular welding electrode comprising the steps of:
a. providing a strip of a steel material having a length;
b. forming the strip into a substantially cylindrical shape along the length;
c. welding the strip to form a tube sealed along the length; and
d. filling the tube with a granular powder flux to form a tubular welding electrode.
wherein the granular powder flux comprises, by weight of the electrode, 0.5 to 4.0 wt. % magnesium oxide and 0.01 to 0.1 wt. % sulfur.

15. The method of claim 14, wherein the granular powder flux comprises, by weight of the electrode, 2.0 to 3.0 wt. % magnesium oxide.

16. The method of claim 15, wherein the granular powder flux comprises, by weight of the electrode, 2.5 wt. % magnesium oxide.

17. The method of claim 14, wherein the granular powder flux comprises, by weight of the electrode, 0.02 to 0.05 wt. % of a sulfur source.

18. The method of claim 17, wherein the granular powder flux comprises, by weight of the electrode, 0.03 wt. % of a sulfur source.

19. The method of claim 14, further comprising a step e) of drawing the tubular welding electrode to a desired diameter.

20. The method of claim 14, wherein the mechanical closing of step d) involves forming a butt or overlap seam.
